# EUROPÄISCHE PATENTSCHRIFT

(11) **EP 4 460 733 B1**
(45) Veröffentlichungstag und Bekanntmachung des Hinweises auf die Patenterteilung: **19.02.2025**
(21) Anmeldenummer: 24707152.5
(22) Anmeldetag: 21.02.2024
(51) Int. Cl.: G05B 19/43, G05B 19/042, G05D 3/20

(54) **VERFAHREN UND VORRICHTUNG ZUM UNTERDRÜCKEN VON RAUSCHEN IN EINEM ANSTEUERSIGNAL FÜR EINEN REGELKREIS EINES FELDGERÄTS ZUM REGULIEREN VON FLUIDEN IN EINER PROZESSTECHNISCHEN ANLAGE**
METHOD AND DEVICE FOR SUPPRESSING NOISE IN A DRIVE SIGNAL FOR A CONTROL LOOP OF A FIELD APPARATUS FOR REGULATING FLUIDS IN A PROCESS ENGINEERING SYSTEM
PROCÉDÉ ET DISPOSITIF DE SUPPRESSION DE BRUIT DANS UN SIGNAL DE COMMANDE POUR UNE BOUCLE DE COMMANDE D'UN APPAREIL DE TERRAIN POUR RÉGULER DES FLUIDES DANS UN SYSTÈME D'INGÉNIERIE DE PROCESSUS

(30) Priorität: 24.03.2023 DE 102023107498
(43) Veröffentlichungstag der Anmeldung: 13.11.2024
(73) Patentinhaber: Samson Aktiengesellschaft, 60314 Frankfurt (DE)
(72) Erfinder: FIEBIGER, Andreas, 65232 Taunusstein (DE); BOLL, Tobias, 60385 Frankfurt am Main (DE); FIEBIGER, Christian, 65719 Hofheim am Taunus (DE)
(74) Vertreter: Köllner, Malte
(86) Internationale Anmeldenummer: PCT/EP2024/054417
(87) Internationale Veröffentlichungsnummer: WO 2024/199828

(56) Entgegenhaltungen:
- US-A1- 2011 119 320
- US-A1- 2013 041 481
- US-A1- 2018 181 146

## Beschreibung

### Gebiet der Erfindung

Die Erfindung betrifft ein Verfahren zum Unterdrücken von Rauschen in einem Ansteuersignal für einen Stellungsregler eines Feldgeräts zum Regulieren von Fluiden in einer prozesstechnischen Anlage, sowie eine entsprechende Vorrichtung.

Eine der Hauptaufgaben eines Stellungsreglers eines Stell- oder Regelventils ist das Folgen des Sollwerts. Dieser Sollwert kann z.B. ein analoges Stromsignal aus einer Leitsystem-Ausgangskarte oder ein digitales Signal sein. Es weist oft Störungen in Form von Rauschen auf. Ist dieses Rauschen in Bezug auf den nutzbaren Signalbereich bzw. die nutzbare Signalamplitude zu stark, kann eine ganze Reihe von Problemen auftreten:
- Komponenten des Stellungsreglers können einen erhöhten Verschleiß erfahren, z.B. I/P-Wandler, Luftleistungsverstärker (dort insbesondere Membranen).
- Transistoren haben eine höhere Anzahl an Schaltzyklen.
- Kolbenschieber können unerwünscht schwingen.
- Ist das Rauschen sehr stark, regelt der Stellungsregler ggf. sogar den Ventilantrieb derart, dass er dem Rauschen folgt, was den Prozess beeinträchtigt und zu erhöhtem Verschleiß an Dichtungen und Ventilantrieb führt.
- Vom Sollwert abhängige Zusatzfunktionen, die ggf. im Stellungsregler bereitgestellt werden (z.B. eine Dichtschließfunktion), funktionieren evtl. nicht mehr korrekt.

In vielen Fällen lässt sich das Rauschen nicht abstellen, oder der Aufwand zur Ermittlung des zugrundeliegenden Fehlers ist sehr hoch.

### Stand der Technik

Es ist bekannt, Stellungsregler in prozesstechnischen Anlagen mit einem fest definierten konstanten Rauschfilter, beispielsweise einem Tiefpassfilter, auszustatten. Dieser kann ggf. ein Rauschen in einem Sollwert-Signal dämpfen. Allerdings ist dieser Filter immer aktiv, dämpft somit auch schnelle Sollwert-Änderungen, die nicht durch Rauschen verursacht werden, und seine Stärke kann nicht an die im Anwendungsfall vorliegenden Bedingungen angepasst werden. Bei starkem Rauschen reicht eine solche Filterung eventuell nicht aus.

Die Veröffentlichung EP 2 417 502 B1 beschreibt einen Ratenbegrenzer für einen elektropneumatischen Regler. Dieser begrenzt den Stromanstieg des Stellsignals bzw. der Stellgröße innerhalb der Regelschleife des Reglers und kann ggf. auch zur Filterung und Rauschunterdrückung beitragen. Die Rauschunterdrückung wirkt also nicht direkt auf das Sollsignal der Leitwarte. Da die Rauschunterdrückung im Regelkreis stattfindet, kann es dort zu Verzögerungen kommen, was insbesondere unerwünschte Schwingungen verursachen kann. Ggf. wird sogar die Stabilität des Regelkreises beeinträchtigt. Eine dynamische Änderung der Rauschunterdrückung als Reaktion auf einsetzendes Rauschen oder die Beendigung davon ist nicht vorgesehen.

Aus der Veröffentlichung US 2013/0041481 A1 sind Verfahren und Vorrichtungen zum Begrenzen einer Veränderung einer Antriebsvariablen in einem elektropneumatischen Regler bekannt. Hierzu wird eine Schwankungsgrenze des Reglers auf der Grundlage von Rauschen in einem Steuer- oder Rückkoppelungssignal bestimmt. Auf der Grundlage dieser Signale wird eine Antriebsvariable berechnet. Sollte die Differenz zwischen dem aktuellen und einem früheren Wert der Antriebsvariablen größer als die Schwankungsgrenze des Reglers sein, wird der Wert der Antriebsvariablen geändert.

### Aufgabe

Aufgabe der Erfindung ist es, ein Verfahren und/oder eine Vorrichtung anzugeben, welche ermöglichen, ein möglicherweise vorhandenes Rauschen in einem Ansteuersignal für einen Stellungsregler eines Feldgeräts zum Regulieren von Fluiden in einer prozesstechnischen Anlage besser zu erkennen und zu unterdrücken, ohne dabei in die Regelschleife des Stellungsreglers einzugreifen und/oder die Regelgüte zu beeinträchtigen.

### Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte werden in einer bevorzugten Variante der Erfindung in der angegebenen Reihenfolge ausgeführt. Die Schritte müssen aber nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Unterdrücken von Rauschen in einem Ansteuersignal für einen Regelkreis eines Feldgeräts zum Regulieren von Fluiden in einer prozesstechnischen Anlage vorgeschlagen. Der Stellungsregler weist eine Regelschleife auf, und das Verfahren umfasst die folgenden Schritte:
a) Das Ausmaß des Rauschens im Ansteuersignal wird bestimmt. Hierzu könnten grundsätzlich beliebige, dem Fachmann geläufige Methoden bzw. Algorithmen verwendet werden, z.B. Zählen der Nulldurchgänge der ersten, zweiten oder dritten zeitlichen Ableitung oder der lokalen Extremwerte des Ansteuersignals oder Untersuchen der Differenz aus Ansteuersignal und einer mittels linearer Regression an dieses angepassten Geraden oder eines gleitenden Durchschnittes.
   Im vorliegenden Fall wird das Ausmaß des Rauschens im Ansteuersignal dadurch bestimmt, dass fortlaufend lokale Maxima des Ansteuersignals bestimmt und jeweils für die Dauer einer ersten vorgegebenen Zeitspanne gezählt werden. Wenn die gezählte Anzahl der lokalen Maxima pro erster vorgegebener Zeitspanne eine vorgegebene Anzahl überschreitet, wird das Rauschen als stark bewertet. Das Ausmaß des Rauschens wird dann dadurch bestimmt, wie oft während eines zweiten vorgegebenen Zeitraums das Ausmaß des Rauschens maximal als stark bewertet wird.
b) Wenn das Ausmaß des Rauschens eine erste vorgegebene Schwelle überschreitet, wird das Rauschen im Ansteuersignal durch einen Filter reduziert, wodurch sich ein gefiltertes Ansteuersignal ergibt. Beispielsweise kann als zweiter vorgegebener Zeitraum ein Tag betrachtet werden, und die erste vorgegebene Schwelle könnte derart ausgewählt sein, dass die Rauschunterdrückung zugeschaltet wird, wenn während dieses zweiten vorgegebenen Zeitraums das Ausmaß des Rauschens mehr als beispielsweise 20 Mal als stark bewertet wird. Auf diese Weise kann vermieden werden, dass die Rauschunterdrückung unnötigerweise eingeschaltet wird, z.B. aufgrund einer einmalig auftretenden Störung, die kein Eingreifen erfordert, weil sie nicht dauerhaft auftritt.
c) Das gefilterte Ansteuersignal wird an den Regekreis weitergeleitet.
d) Wenn das Ausmaß des Rauschens die erste vorgegebene Schwelle nicht überschreitet, wird das ungefilterte Ansteuersignal an den Regekreis weitergeleitet.

Der Regelkreis regelt typischerweise die Stellung einer Komponente im Feldgerät, z.B. die Stellung eines Ventilglieds. Ist das Feldgerät z.B. ein pneumatisch angetriebenes Stellventil, dann wird der Regelkreis wie stets einen Regler, eine Regelstrecke und eine Feedback-Schleife aufweisen; im Falle eines pneumatisch angetriebenen Stellventils wird die Regelstrecke dann i.d.R. einen I/P-Wandler, einen Luftleistungsverstärker und einen pneumatischen Antrieb für das Ventilglied aufweisen.

Dadurch wird es möglich, flexibel auf ein durch Rauschen beeinträchtigtes Sollwert-Signal zu reagieren. Wird das Rauschen zu stark, so dass die oben beschriebenen Probleme auftreten könnten, wird ein geeigneter Filter zugeschaltet, der das Rauschen dämpft oder auf andere geeignete Weise reduziert. Im einfachsten Fall könnte dies ein Tiefpassfilter sein, bevorzugt werden jedoch Filter, die besser an das im Anwendungsfall vorkommende bzw. erwartete Rauschen angepasst sind.

Die Filterung geschieht außerhalb des Regelkreises, so dass der Einfluss auf die Regelgüte und insbesondere auf das Ansprechverhalten und die Stabilität des Reglers möglichst gering bleibt.

Eine bessere Abstimmung der Rauschunterdrückung auf die vorhandene Situation wird erreicht, wenn das beschriebene Verfahren dadurch ergänzt wird, dass, wenn das Ausmaß des Rauschens die erste vorgegebene Schwelle überschreitet, mindestens eine der folgenden Maßnahmen durchgeführt wird:
1. Ein Hardwarefilter wird zugeschaltet;
2. ein Softwarefilter wird eingesetzt;
3. falls bereits ein Softwarefilter verwendet wird, wird zu einem Softwarefilter eines anderen Typs gewechselt; und/oder
4. falls bereits ein Softwarefilter verwendet wird, wird eine Filterkonstante des Softwarefilters verändert.

Auf diese Weise wird erreicht, dass nur dann, wenn das Ausmaß des Rauschens des Sollwertsignals dies erforderlich macht, eine entsprechend verstärkte Filterung erfolgt. Durch die genannten möglichen Maßnahmen kann sichergestellt werden, dass eine für die jeweilige Anwendungssituation optimal wirkende Rauschunterdrückung zum Einsatz kommt. Selbstverständlich sind auch Kombinationen der genannten Maßnahmen möglich. Für die vorgesehenen Softwarefilter ist lediglich ein entsprechend programmierter Prozessor erforderlich, der beispielsweise im Stellungsregler vorgesehen sein kann. Alternativ könnte er auch auf einer Zusatzkarte oder in einem separaten Baustein bzw. Modul angeordnet sein.

Das Verfahren kann außerdem vorsehen, dass ein Beeinflussungssignal zum Schalten und/oder Einstellen eines Filters ausgegeben wird, wobei das Beeinflussungssignal dem bestimmten Ausmaß des Rauschens entspricht. Anhand dieses Signals kann z.B. ausgewählt werden, welcher konkrete Filter oder welche konkrete Einstellung geschaltet wird, wodurch die Rauschunterdrückung an die konkreten Bedingungen im Anwendungsfall angepasst werden kann.

Bei dem Folgenden handelt es sich um ein Beispiel, welches nicht Teil der beanspruchten Erfindung ist, sondern lediglich zum besseren Verständnis beitragen soll. Das Ausmaß des Rauschens im Ansteuersignal kann besonders zuverlässig und mit besonders geringem Rechenaufwand mit den folgenden Schritten ermittelt werden: Lokale Maxima des Ansteuersignals werden fortlaufend bestimmt und jeweils für die Dauer einer ersten vorgegebenen Zeitspanne gezählt. Als erste vorgegebene Schwelle für das Ausmaß des Rauschens im Ansteuersignal wird eine vorgegebene Anzahl N der lokalen Maxima pro erster vorgegebener Zeitspanne gewählt. Als erster vorgegebene Zeitspanne kann vorzugsweise ein Wert zwischen einer und zehn Sekunden gewählt werden, besonders bevorzugt 5 s. Als vorgegebene Anzahl kann z.B. ein Wert zwischen 10 und 30 vorgesehen sein, vorzugsweise 20. Liegt die innerhalb der ersten vorgegebenen Zeitspanne registrierte Anzahl lokaler Maxima des Ansteuersignals derart hoch, ist es sehr wahrscheinlich, dass es sich nicht um echte lokale Maxima, d.h. Richtungswechsel, des Sollwertes handelt, sondern um durch Rauschen verursachte Störungen. Dies gilt grundsätzlich für alle lokalen Extremwerte des Ansteuersignals. Es genügt jedoch, wahlweise nur die lokalen Maxima oder nur die lokalen Minima zu betrachten, da auf jedes lokale Maximum ein lokales Minimum folgt und umgekehrt. Würde man alle lokalen Extremwerte betrachten, müsste lediglich die vorgegebene Anzahl N mit 2 multipliziert werden. Das schließt die Diskussion dieses Beispiels ab.

Lokale Maxima des Ansteuersignals werden vorzugsweise dann erkannt, wenn das Ansteuersignal nach einem Anstieg um einen kleinen, vorgegebenen Anteil, z.B. zwischen 0,05 und 0,25 %, absinkt. Der Rechenaufwand für z.B. die Bestimmung von Nullstellen der Ableitung kann auf diese Weise vermieden werden. Alternativ könnten auch abwechselnd lokale Maxima und lokale Minima detektiert werden.

Falls das Ansteuersignal einem Sollwert entspricht, der nicht statisch ist, kann die Bestimmung des Ausmaßes des Rauschens verbessert werden, wenn die vorgegebene Anzahl der Maxima und/oder der vorgegebene Anteil in Abhängigkeit von einem Mittelwert der zeitlichen Ableitung des Ansteuersignals vorgegeben wird. Ist das Ansteuersignal nicht statisch, weist also aufgrund beabsichtigter Änderungen des Sollwertes signifikante Steigungen auf, verringert sich nämlich die Anzahl der lokalen Maxima des Ansteuersignals, die nach dem bereits beschriebenen Verfahren detektiert werden können. Je steiler die Sollwertänderung ausfällt, desto weniger lokale Maxima werden erkannt. Entsprechend sollte die Anzahl Maxima, die zur Rauscherkennung herangezogen wird, sinken. Kumulativ oder alternativ kann der vorgegebene Anteil verkleinert werden, um die Anzahl der Maxima möglichst unverändert zu halten. Der genaue Verlauf dieser Abhängigkeit ist jedoch von lokalen Gegebenheiten des jeweiligen Anwendungsfalls abhängig und sollte daher bei der Inbetriebnahme bzw. Initialisierung dieses Systems eingestellt werden. Auch die Aktualisierungsrate des Ansteuersignals durch z.B. die Leitwarte im Verhältnis zur Geschwindigkeit der jeweiligen Ausführung des vorliegenden Verfahrens spielt hierbei eine Rolle: Ist diese Aktualisierungsrate z.B. langsamer als 2 s⁻¹, ist eine solche Veränderung der vorgegebenen Anzahl in der Regel nicht erforderlich.

Die Erkennung von möglichen Problemen und/oder Fehlern in der Anlage wird erleichtert, wenn eine Warnmeldung ausgegeben wird, wenn das Ausmaß des Rauschens im Ansteuersignal eine zweite vorgegebene Schwelle überschreitet. Diese sollte typischerweise höher als die erste vorgegebene Schwelle liegen, so dass eine solche Warnmeldung nur Auftritt, wenn das Rauschen im Ansteuersignal ein Ausmaß erreicht, das von Fachleuten als bedenklich eingestuft wird, beispielsweise wenn eine wirksame Rauschunterdrückung nicht mehr möglich ist, ohne die Regelgüte des Regelkreises des Stellungsreglers zu beeinträchtigen.

Ob das Ausmaß des Rauschens die zweite vorgegebene Schwelle überschreitet, lässt sich besonders effizient mit den folgenden Schritten ermitteln: Das Ausmaß des Rauschens im gefilterten Ansteuersignal wird mit einer der beschriebenen Ausführungsformen bestimmt. Wenn das Ausmaß des Rauschens im gefilterten Ansteuersignal die erste vorgegebene Schwelle überschreitet, gilt die zweite vorgegebene Schwelle als überschritten. Hierfür müsste das gefilterte Ansteuersignal in die Bestimmung des Ausmaßes des Rauschens eingespeist werden.

Alternativ kann als zweite vorgegebene Schwelle eine Schwelle für die Rauschamplitude festgelegt werden. Wenn das Ausmaß des Rauschens im Ansteuersignal die erste vorgegebene Schwelle überschreitet, muss dann die Rauschamplitude des Ansteuersignals bestimmt werden. Dies kann beispielsweise nach einer besonders stark vereinfachten Vorgehensweise erfolgen, indem während der vorgegebene Zeitspanne (z.B. 5 s) jeweils nicht nur die Anzahl lokaler Maxima ermittelt wird, sondern auch der Wert des jeweils größten lokalen Maximums. Dieser entspricht angenähert der doppelten Rauschamplitude bzw. der Rauschbandbreite. Dies gilt allerdings nur, wenn sich der Sollwert während der vorgegebenen Zeitspanne im Wesentlichen statisch verhält.

Unnötige Berechnungen und ggf. Verfälschungen des Ansteuersignals können vermieden werden, wenn das Reduzieren des Rauschens im Ansteuersignal durch einen Filter beendet wird, wenn das Ausmaß des Rauschens für einen zweiten vorgegebenen Zeitraum, beispielsweise einen Tag, unterhalb der ersten vorgegebenen Schwelle bleibt.

Die Aufgabe wird ferner gelöst durch eine Vorrichtung zum Unterdrücken von Rauschen in einem Ansteuersignal für einen Regelkreis eines Feldgeräts zum Regulieren von Fluiden in einer prozesstechnischen Anlage. Der Stellungsregler weist dabei eine Regelschleife auf. Die Vorrichtung umfasst einen ersten Anschluss zum Empfangen des Ansteuersignals, mindestens ein schaltbares Filtermodul zum Reduzieren des Rauschens im Ansteuersignal, ein Sollwertempfangsmodul zum Bestimmen des Ausmaßes des Rauschens im empfangenen Ansteuersignal und zum Schalten des mindestens einen Filtermoduls, sowie einen zweiten Anschluss zum Weiterleiten des gefilterten oder des ungefilterten Ansteuersignals an des Regelkreis. Dabei ist das Sollwertempfangsmodul derart konfiguriert, dass es das weiter oben beschriebene Verfahren ausführt.

Die genannte Vorrichtung kann als Nachrüst-Element für beliebige Ventilstellungsregler ausgebildet sein, wenn es sich bei den Modulen um integrierte Schaltungen und/oder Stecckarten und/oder programmierbare Hardware handelt. Programmierbare Hardware umfasst beispielsweise ASICSs, DSPs und/oder FPGAs. Dadurch ist das Ausführen des Verfahrens nicht abhängig von der Ausstattung des Stellungsreglers.

Die Aufgabe wird außerdem gelöst durch ein Computerprogramm, umfassend Befehle, die bewirken, dass die bereits beschriebene Vorrichtung die weiter oben beschriebenen Verfahrensschritte ausführt.

Ein computerlesbares Medium, auf dem das soeben beschriebene Computerprogramm gespeichert ist, löst ebenfalls die Aufgabe.

Die Aufgabe wird auch durch einen Stellungsregler für ein Feldgerät gelöst, wobei der Stellungsregler eine Vorrichtung aufweist, wie sie weiter oben beschrieben wurde. Dabei können Komponenten des Regelkreises auch außerhalb des Gehäuses des Stellungsreglers liegen.

Bevorzugt handelt es sich dabei um einen Stellungsregler mit einem I/P-Wandler und einem Luftleistungsverstärker, also um einen Stellungsregler, der elektropneumatisch arbeitet.

Die Aufgabe wird weiterhin gelöst durch ein Feldgerät zum Regulieren eines Fluides in einer prozesstechnischen Anlage mit einem Stellungsregler, wie er soeben beschrieben wurde, und durch eine prozesstechnische Anlage mit mindestens einem solchen Feldgerät.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine schematische Darstellung einer Vorrichtung zum Unterdrücken von Rauschen in einem Ansteuersignal für einen Stellungsregler eines Feldgeräts zum Regulieren von Fluiden in einer prozesstechnischen Anlage, bei der Filterkonstanten eingestellt werden;
- Fig. 2: eine schematische Darstellung einer Vorrichtung zum Unterdrücken von Rauschen in einem Ansteuersignal für einen Stellungsregler eines Feldgeräts zum Regulieren von Fluiden in einer prozesstechnischen Anlage, bei der unterschiedliche Software-Filter geschaltet werden;
- Fig. 3: eine schematische Darstellung einer Vorrichtung zum Unterdrücken von Rauschen in einem Ansteuersignal für einen Stellungsregler eines Feldgeräts zum Regulieren von Fluiden in einer prozesstechnischen Anlage, bei der HardwareFilter geschaltet werden;
- Fig. 4: eine schematische Darstellung des Algorithmus zum Ermitteln des Ausmaßes des Rauschens;
- Fig. 5A: ein simuliertes Beispiel eines leicht verrauschten Signals, bei dem das Rauschen nicht als stark bewertet wird;
- Fig. 5B: die Stellen, an denen lokale Maxima im Signal aus Fig. 5A erkannt werden;
- Fig. 5C: die resultierende (nicht-)Erkennung starken Rauschens im Signal aus Fig. 5A;
- Fig. 6A: ein simuliertes Beispiel eines verrauschten Signals, bei dem das Rauschen teilweise als stark bewertet wird;
- Fig. 6B: die Stellen, an denen lokale Maxima im Signal aus Fig. 6A erkannt werden;
- Fig. 6C: die resultierende Erkennung starken Rauschens im Signal aus Fig. 6A;
- Fig. 7A: ein dynamisch ansteigendes Signal, dem ein simuliertes Rauschen aufgeprägt ist;
- Fig. 7B: ein im Wesentlichen konstantes Signal, dem dasselbe Rauschen wie in Fig. 7A aufgeprägt ist;
- Fig. 8: eine mögliche Abhängigkeit der ersten vorgegebenen Anzahl der lokalen Maxima von der mittleren Geschwindigkeit des Sollwerts;
- Fig. 9: eine schematische Darstellung des Algorithmus zum Ermitteln des Ausmaßes des Rauschens für sich dynamisch ändernde Sollwerte; und
- Fig. 10: eine vereinfachte schematische Schaltskizze der Positionsregelung eines Feldgerätes mit Stellungsregler, pneumatischem Antrieb und der Vorrichtung zum Unterdrücken von Rauschen.

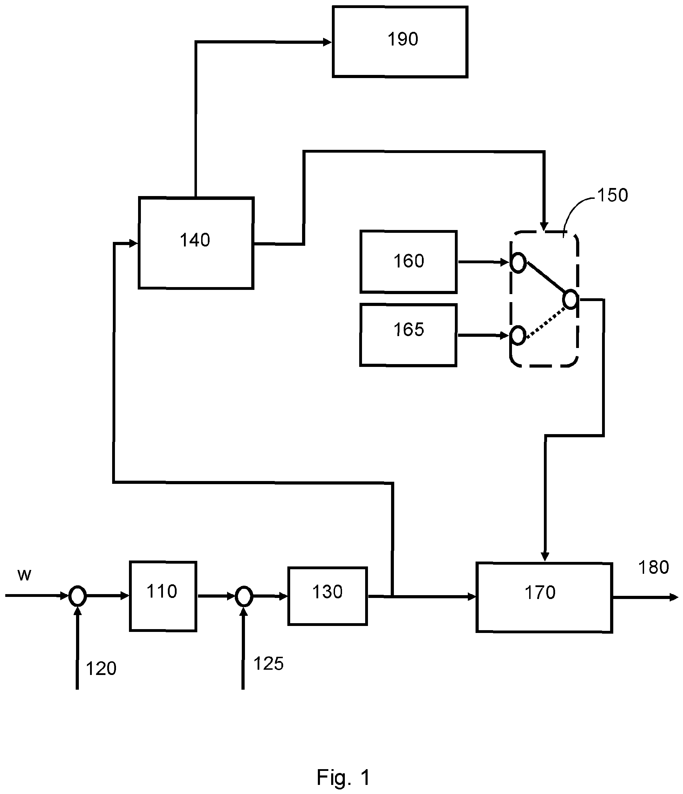

Fig. 1 zeigt eine Vorrichtung zum Unterdrücken von Rauschen in einem Ansteuersignal für einen Stellungsregler eines Feldgeräts zum Regulieren von Fluiden in einer prozesstechnischen Anlage. Das Ansteuersignal bzw. Sollwertsignal w wird zunächst vorzugsweise von einem Hardwarefilter 110 nach dem bekannten Stand der Technik verarbeitet. Hierbei handelt es sich typischerweise um einen analogen Tiefpass-Filter erster Ordnung, z.B. mit Grenzfrequenz 6 Hz. Rauschen von äußeren Störsignalen 120, die irgendwo in der Anlage ihren Ursprung haben, wird so zumindest teilweise gedämpft. Allerdings können auch innerhalb der Schaltung des Stellungsreglers Störungen 125 hinzukommen, die ebenfalls zum Rauschen des Ansteuersignals beitragen. Dieses Signal wird in einem A/D-Wandler 130 digitalisiert.

Ein Sollwertempfangsmodul 140 prüft das Ausmaß des Rauschens im digitalisierten Ansteuersignal. Abhängig davon, ob in hinreichendem Umfang starkes Rauschen festgestellt wird, oder nicht, schaltet das Sollwertempfangsmodul 140 mittels eines Schalters 150 zwischen zwei Einstellungen bzw. Filterkonstanten 160, 165 um. Diese legen fest, wie der Softwarefilter 170 das digitalisierte Ansteuersignal verarbeitet. Beispielsweise könnte die Einstellung für schwaches Rauschen so aussehen, dass das Signal überhaupt nicht verändert wird, während für den Fall starken Rauschens eine Filterung vorgesehen ist, die für das erwartete Rauschen für diesen Teil der Anlage ausgelegt ist.

Das ggf. gefilterte digitalisierte Ansteuersignal 180 wird an die Regelschleife (nicht dargestellt) weitergeleitet. Für den Fall, dass besonders starkes Rauschen erkannt wird, ist außerdem die Ausgabe einer Warnmeldung 190 vorgesehen.

Ob der Umfang des festgestellten starken Rauschens hinreichend ist oder nicht, wird vorzugsweise anhand einer ersten vorgegebenen Schwelle und eines vorgegebenen Zeitraums entschieden. Beispielsweise kann als vorgegebener Zeitraum ein Tag betrachtet werden, und die vorgegebene Schwelle könnte derart ausgewählt sein, dass zwischen den Filterkonstanten umgeschaltet wird, wenn während dieses vorgegebenen Zeitraums das Rauschen mehr als 20 Mal als stark bewertet wird.

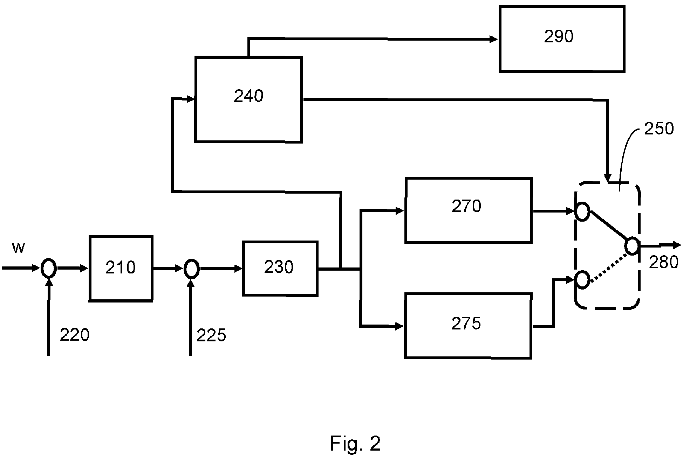

Fig. 2 zeigt eine Abwandlung der Vorrichtung aus Fig. 1. Auch hier wird das mit Rauschen aus Störsignalen 220 unterlegte Sollwert- bzw. Ansteuersignal w zunächst von einem Hardwarefilter 210 verarbeitet. Weitere Störsignale 225 können innerhalb des Stellungsreglers hinzukommen. Mittels A/D-Wandler 230 wird das Signal digitalisiert und anschließend von einem Sollwertempfangsmodul 240 auf die Stärke des Rauschens geprüft. Abhängig davon, ob starkes Rauschen festgestellt wird, oder nicht, schaltet das Sollwertempfangsmodul 240 in dieser Ausführung mittels des Schalters 250 jedoch zwischen zwei unterschiedlichen Softwarefiltern 270, 275 um, die das Ansteuersignal jeweils auf unterschiedliche Weise filtern. Bei einem der Softwarefilter kann es sich z.B. um einen Standard-Filter handeln, der auch bei einem nicht oder kaum verrauschten Signal sinnvoll ist, während der andere Filter besonders auf das für diesen Stellungsregler erwartete Rauschen abgestimmt ist. Das gefilterte Ansteuersignal 280 wird an die Regelschleife (nicht dargestellt) weitergeleitet. Bei besonders starkem Rauschen ist auch hier wieder eine Warnmeldung 290 vorgesehen.

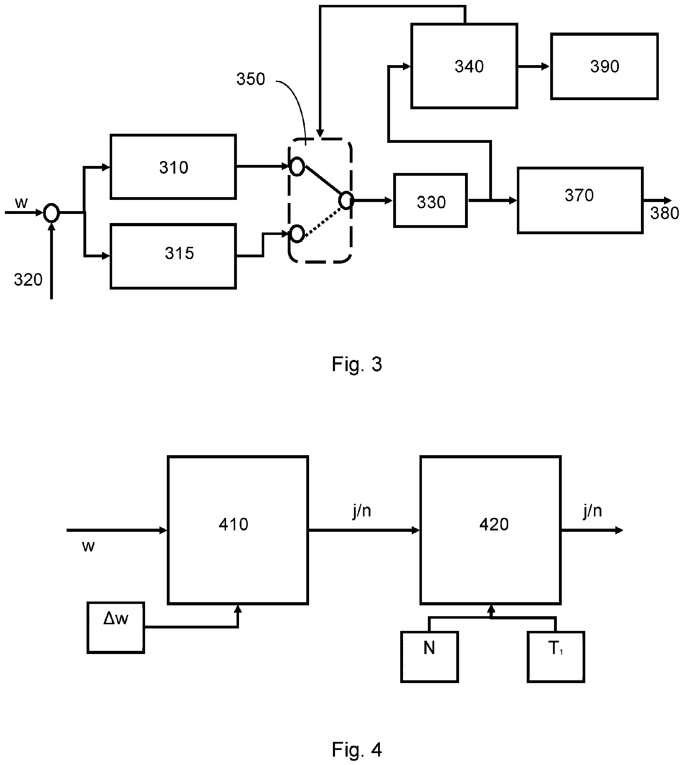

Eine weitere Abwandlung der Vorrichtung aus Fig. 1 und Fig. 2 ist in Fig. 3 dargestellt. Auch hierbei liegt ein Sollwert- bzw. Ansteuersignal w vor, das durch Störsignale 320 aus der Anlage verrauscht sein kann. Hier sind jedoch zwei verschiedene (analoge) Hardwarefilter 310, 315 vorhanden. Da diese dem A/D-Wandler 330 vorgeschaltet sind, können sie Störungen, die sich aus der Elektronik des Stellungsreglers ergeben, nicht filtern. Das durch den A/D-Wandler 330 digitalisierte Ansteuersignal wird von einem Sollwertempfangsmodul 340 auf das Ausmaß des Rauschens untersucht. Abhängig davon, ob starkes Rauschen festgestellt wird oder nicht, schaltet das Sollwertempfangsmodul 340 mittels des Schalters 350 zwischen den Hardwarefiltern 310 bzw. 315 um. Das digitalisierte Signal kann auch von einem Softwarefilter 370 - in diesem Fall nicht schaltbar - weiter gefiltert werden. Das gefilterte Ansteuersignal 380 wird an den Regelkreis (nicht dargestellt) weitergeleitet. Ggf. kann eine Warnmeldung 390 ausgegeben werden.

Diese Ausführungsform hat neben dem Nachteil, durch Störungen aus der Signalverarbeitung im Stellungsregler verursachtes Rauschen nicht gezielt filtern zu können, den Vorteil, dass das Sollwertempfangsmodul 340 im Falle starken Rauschens, wenn zwischen den Filtern 310, 315 entsprechend umgeschaltet wurde, das stärker gefilterte Signal automatisch mit untersuchen kann, womit eine Art Erfolgskontrolle stattfindet. Die Ausgabe einer Warnmeldung kann besonders bevorzugt vom Resultat dieser Untersuchungen abhängig gemacht werden, so dass z.B. eine Warnmeldung ausgegeben wird, wenn das Umschalten auf den stärkeren Filter nicht ausreicht, um das bestimmte Ausmaß des Rauschens auf ein genügend niedriges Niveau zu bringen.

Kombinationen und weitere Ergänzungen der Ausführungsformen aus Fig. 1, 2 und 3 sind selbstverständlich möglich, beispielsweise die Verwendung von Filterkaskaden mit mehreren Filterstufen. Dabei können auch unterschiedliche Filtertypen wie FIR-Filter (Filter mit endlicher Impulsantwort), IIR-Filter (Filter mit unendlicher Impulsantwort), Medianfilter oder andere nichtlineare Filter zum Einsatz kommen.

In Fig. 4 ist schematisch dargestellt, wie das Ausmaß des Rauschens vorzugsweise bestimmt werden kann. Im zu untersuchenden Ansteuer- bzw. Sollwert-Signal w (in diesem Fall bereits digitalisiert) werden fortlaufend lokale Maxima detektiert 410. Hierzu sind grundsätzlich verschiedenste Verfahren zur Extremwerterkennung möglich, besonders bevorzugt wird jedoch, dass ein Maximum als erkannt gilt, wenn das Signal w nach einem Anstieg um mindestens einen vorgegebenen Anteil Δw wieder absinkt. Wird ein lokales Maximum erkannt, wird dies zur Erkennung starken Rauschens 420 weitergegeben, wobei hierzu ein einfaches Ja/Nein-Signal j/n ausreicht, da nur die Information benötigt wird, dass ein lokales Maximum detektiert wurde. Diese Erkennung erfolgt dadurch, dass die detektierten lokalen Maxima gezählt werden. Liegen innerhalb einer ersten vorgegebenen Zeitspanne T₁ mehr lokale Maxima als eine vorgegebene Anzahl N vor, gilt das Ausmaß des Rauschens als hoch. Ob das Rauschen stark oder schwach ist, wird wiederum als Ja/Nein-Signal j/n ausgegeben.

Nicht durch das Rauschen verursachte Maxima des Sollwert-Signals können durch dynamisches Verfahren entstehen, wenn der Sollwert w seine Richtung ändert. Allerdings ist es unwahrscheinlich, dass eine große Anzahl davon in einem kleinen Zeitraum auftritt.

Eine solcherart funktionierende Rauscherkennung beruht auf besonders einfachen Rechenoperationen, die wenig Ressourcen benötigen und schnell ablaufen können. Dies ist insbesondere vorteilhaft, weil sie auf relativ einfacher bzw. leistungsschwacher Hardware, z.B. einem in einem Stellungsregler bereits vorhandenen Signalprozessor, ablaufen können, ohne sonstige Funktionen, die vielfach in Echtzeit ablaufen müssen, zu beeinträchtigen. Zudem ist es nicht erforderlich, signifikante Mengen an Daten zu speichern, da jeweils nur "erkannt" und ein Ja/Nein-Signal weitergegeben werden muss. Zudem ist diese Art der Rauscherkennung nur wenig von einer ggf. vorhandenen Zykluszeit des Sollwertes aus dem Leitsystem abhängig. Diese Zykluszeit ist die Aktualisierungsrate des Sollwertes in der Stromausgangsschaltung des Leitsystems. Gängige Zykluszeiten liegen im Bereich von 100 ms bis 1.000 ms.

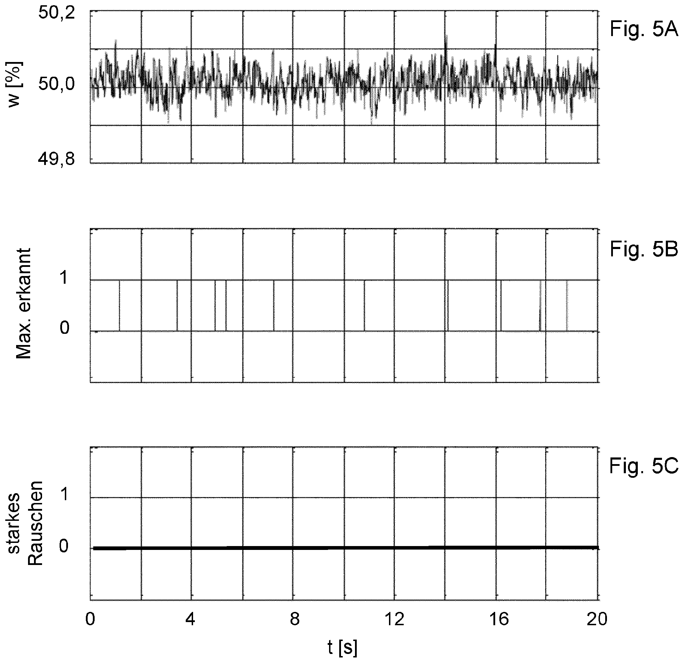

Fig. 5A zeigt beispielhaft ein simuliertes Ansteuersignal, in diesem Fall konstant 50 %, dem ein schwaches Rauschen (Rauschbandbreite, d.h. 6 Sigma des gaußverteilten Rauschsignals = 0,2 %) aufgeprägt wurde. Mit einem vorgegebenen Anteil von Δw = 0,15 %, einer vorgegebenen Anzahl N = 20 und einer ersten vorgegebenen Zeitspanne T₁ = 5 s werden in Fig. 5B über den gesamten dargestellten Zeitraum von 20 s ungefähr 10 lokale Maxima detektiert. Dies reicht nicht aus, um das Rauschen als stark zu bewerten, was in Fig. 5C zu erkennen ist.

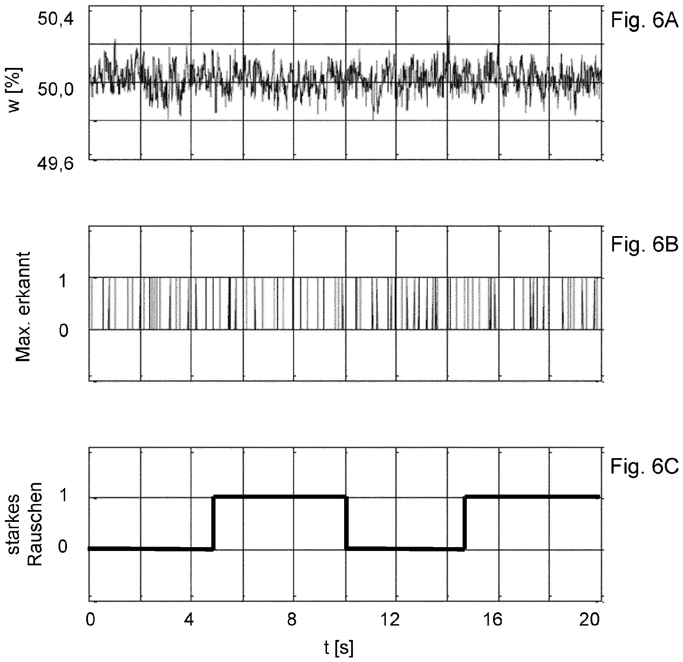

In Fig. 6A ist ebenfalls ein simuliertes Ansteuersignal von konstant 50 % zu sehen, dem ein stärkeres Rauschen (6 Sigma des gaußverteilten Rauschsignals = 0,37 %) aufgeprägt wurde. Unter den gleichen Bedingungen wie bei Fig. 5A-C, d.h. vorgegebener Anteil Δw = 0,15 %, vorgegebene Anzahl N = 20, erste vorgegebene Zeitspanne T₁ = 5 s werden in Fig. 6B über den dargestellten Zeitraum von 20 s viel mehr lokale Maxima detektiert. In Fig. 6C ist zu sehen, dass das Rauschen folglich in den Zeitabschnitten zwischen 5 und 10 s sowie zwischen 15 und 20 s als stark bewertet wird.

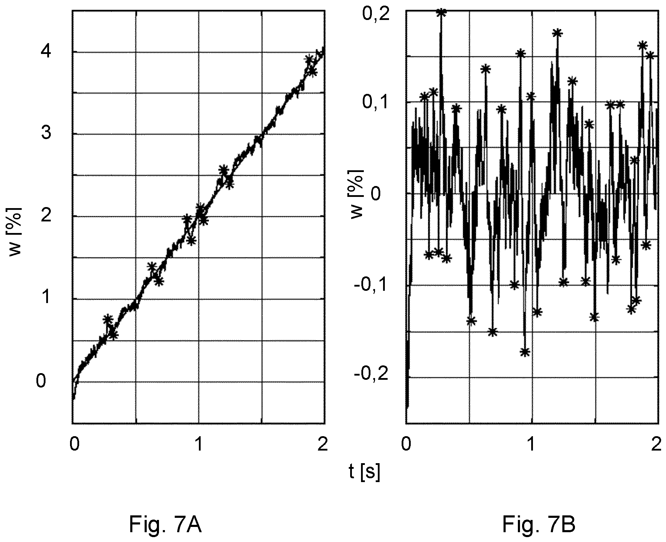

Für den Fall eines sich dynamisch ändernden Sollwertes bzw. Ansteuersignals w, d.h. wenn die zeitliche Ableitung dw/dt nicht mehr klein ist, funktioniert diese Form der Rauscherkennung weniger gut, wie anhand von Fig. 7A und Fig. 7B zu erkennen ist: In Fig. 7A ist ein dynamischer Sollwertverlauf mit einer Steigung von 2 %/s dargestellt, in Fig. 7B ein konstanter Sollwert. In beiden Fällen wurde dasselbe Rauschsignal überlagert. Die jeweils detektierten lokalen Extremwerte sind mit Sternchen markiert. Sie wurden jeweils mit dem gleichen vorgegebenen Anteil Δw = 0,15 % ermittelt. Obwohl dasselbe Rauschen überlagert wurde, ist deutlich zu erkennen, dass in Fig. 7A aufgrund des dynamischen Sollwertverlaufs weniger lokale Extremwerte erkannt werden, als in Fig. 7B. Die beschriebene Rauscherkennung würde also weniger oft ansprechen.

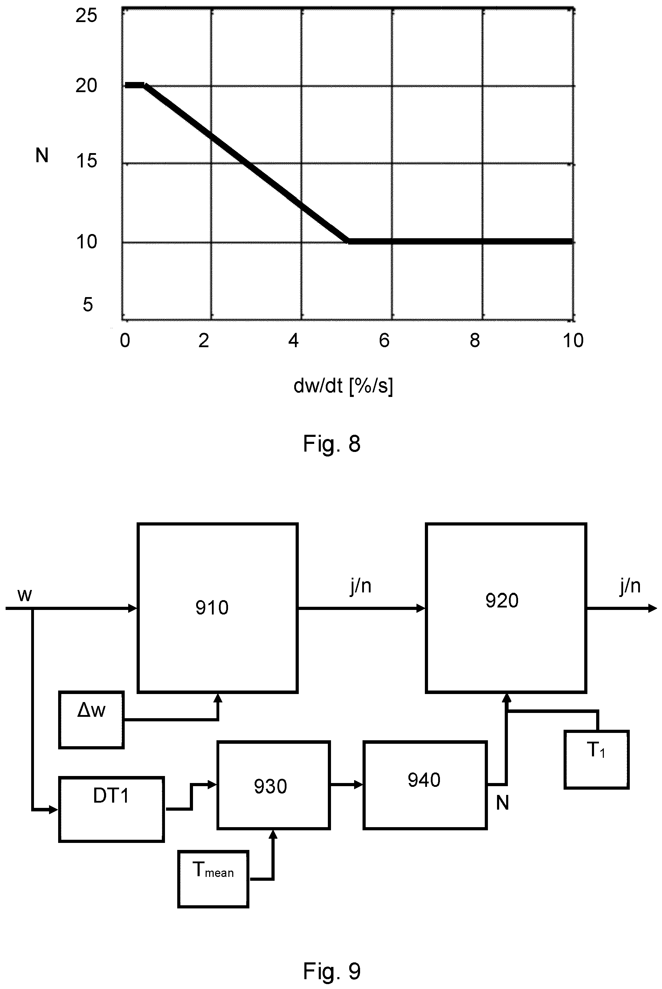

Abhilfe kann dadurch geschaffen werden, dass die vorgegebene Anzahl N der lokalen Maxima in der ersten vorgegebenen Zeitspanne T₁ von der Geschwindigkeit des Sollwertes dw/dt abhängig gemacht wird. Bei größerer Geschwindigkeit müssen innerhalb der vorgegebenen Zeitspanne T₁ nicht mehr so viele Maxima N vorliegen, um das Rauschen als hoch zu bewerten. Ein beispielhafter Verlauf der vorgegebenen Anzahl N in Abhängigkeit von der Geschwindigkeit des Sollwertes ist in Fig. 8 dargestellt, wobei für ein statisches Ansteuersignal weiterhin bei T₁ = 5 s die vorgegebene Anzahl N = 20 sein soll. Dieser Verlauf ist von lokalen Gegebenheiten, Eigenschaften der Schaltungen und der typischerweise vorliegenden Dynamik des Sollwert-Signals abhängig und muss daher für jeden Einzelfall gesondert festgelegt werden, beispielsweise bei der Inbetriebnahme der jeweiligen Anlagenkomponente.

In Fig. 9 ist schematisch dargestellt, wie das Ausmaß des Rauschens vorzugsweise bestimmt werden kann, wenn sich der Sollwert bzw. das Ansteuersignal dynamisch ändert. Es handelt sich hierbei um eine Erweiterung des in Fig. 4 dargestellten Vorgehens. Im zu untersuchenden Ansteuer- bzw. Sollwert-Signal w werden fortlaufend lokale Maxima detektiert 910. Dies geschieht bevorzugt dadurch, dass ein Maximum als erkannt gilt, wenn das Signal w nach einem Anstieg um mindestens einen vorgegebenen Anteil Δw wieder absinkt. Wird ein lokales Maximum erkannt, wird dies zur Erkennung starken Rauschens 920 weitergegeben, wobei hierzu ein einfaches Ja/Nein-Signal j/n ausreicht. Zusätzlich wird die zeitliche Ableitung DT1 des Sollwert- bzw. Ansteuersignals gebildet. Zur Stabilisierung und um eine etwaige Abhängigkeit von Zykluszeiten des Leitsystems zu reduzieren, wird diese Geschwindigkeit des Sollwertes über einen Zeitraum Tₘₑₐₙ gemittelt 930. Anhand einer vorgegebenen Abhängigkeit, wie sie beispielhaft in Fig. 8 dargestellt ist, wird die zur gemittelten Sollwertgeschwindigkeit passende vorgegebene Anzahl N ermittelt 940 und ebenfalls zur Erkennung starken Rauschens 920 weitergegeben. Diese Erkennung erfolgt dadurch, dass die detektierten lokalen Maxima gezählt werden. Liegen innerhalb einer ersten vorgegebenen Zeitspanne T₁ mehr lokale Maxima als eine vorgegebene Anzahl N vor, gilt das Rauschen als stark. Ob das Rauschen stark oder schwach ist, wird wiederum als Ja/Nein-Signal j/n ausgegeben.

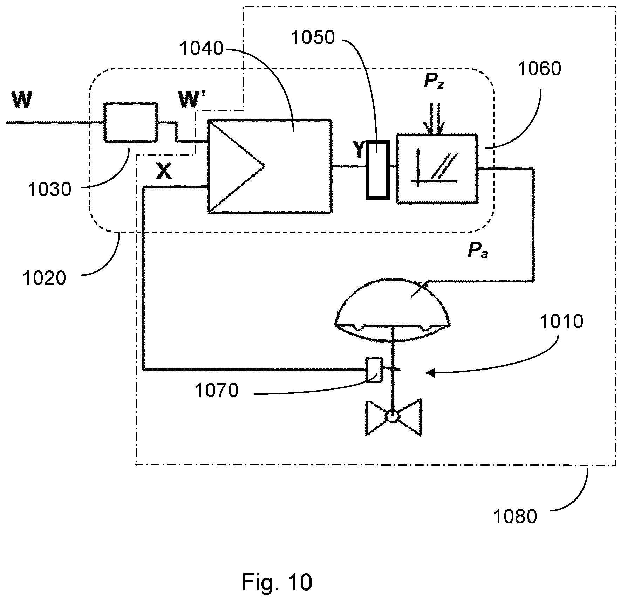

Fig. 10 zeigt schematisch die Schaltung des Positionsregelkreises eines pneumatisch angetriebenen Feldgerätes bzw. Stellventils 1010. Durch die gestrichelte Umrandung ist angedeutet, welche Komponenten in einer typischen Anwendung zum Stellungsregler 1020 des Feldgerätes gehören. Der Sollwert W bzw. das Ansteuersignal wird vom Anwender, von einer Prozess-Steuerung oder Leitwarte o.ä. vorgegeben. Die Vorrichtung zum Unterdrücken von Rauschen 1030 bereinigt bzw. filtert dieses Signal in der bereits beschriebenen Weise. Das gefilterte Ansteuersignal W` wird in den eigentlichen Regler 1040 eingespeist. Das - typischerweise elektrische - Regelsignal Y des Reglers 1040 wird in diesem Beispiel durch einen I/P-Wandler 1050 in einen Steuerdruck umgewandelt, der am Steuereingang eines Luftleistungsverstärkers 1060 anliegt. Der Luftleistungsverstärker 1060 wird mit einem Zuluftdruck P_{z} versorgt und liefert einen Ausgangsdruck Pₐ an den pneumatischen Antrieb des Stellventils 1010. Der Positionssensor 1070 am Stellventil 1010 liefert zu dem jeweiligen gefilterten Sollwert W' den Ist-Wert X an den Regler 1040. Dies ergibt einen geschlossenen Regelkreis 1080 (von der strichpunktierten Linie umschlossen) bzw. eine Regelschleife, welche der beschriebenen Rauschunterdrückung nachgeschaltet ist.

Mit den beschriebenen Vorrichtungen und Verfahren kann ein verrauschtes Ansteuer- bzw. Sollwertsignal klar erkannt und entsprechend darauf reagiert werden, in dem eine passendere Filterung vorgenommen wird, als mit fest voreingestellten Filtern, die für alle möglichen Gegebenheiten passen müssen. Vorzugsweise kann hierbei in drei Stufen vorgegangen werden:
1. "Gutzustand": Es liegt kein kritisches Rauschen vor. Die Standard-Filterung des Ansteuer-Signals ist ausreichend, es erfolgt keine Reaktion.
2. "Mittelzustand" mit Gegenmaßnahmen: Es liegt ein erhebliches Rauschen vor. Durch Umschalten der Filterung des Ansteuer-Signals, wie bereits beschrieben, kann Abhilfe geschaffen werden, insbesondere, ohne den Regelkreis des Stellungsreglers zu beeinträchtigen. Ggf. kann zusätzlich eine Warnmeldung ausgegeben werden, vorzugsweise mit dem Hinweis, dass die vorgenommenen Maßnahmen ausreichen. Dieser Fall tritt beispielsweise ein, wenn das Ausmaß des Rauschens zwischen der ersten und der zweiten vorgegebenen Schwelle liegt.
3. "Schlechtzustand", wobei Gegenmaßnahmen nicht ausreichen: Es liegt ein erhebliches Rauschen vor, dessen Ausmaß so hoch ist, dass es auch mit einer verstärkten Filterung nicht ausreichend kompensiert werden kann, da z.B. die Prozessregelgüte sonst leiden würde. In diesem Fall wird die maximal mögliche Zusatzfilterung geschaltet und zusätzlich eine entsprechende Warnmeldung ausgegeben. Dieser Fall liegt beispielsweise vor, wenn das Ausmaß des Rauschens oberhalb der zweiten vorgegebenen Schwelle liegt.

Tritt nach dem "Mittel-" oder "Schlechtzustand" wieder für längere Zeit der "Gutzustand" ein, werden die Gegenmaßnahmen vorzugsweise wieder zurückgenommen, beispielsweise wenn im vorgegebenen Zeitraum die vorgegebene Schwelle nicht überschritten wird, also z.B. an einem Tag das Ausmaß des Rauschens weniger als 20 Mal als hoch bewertet wird. Hierüber kann ebenfalls eine Meldung ausgegeben werden.

### Glossar

### Anlage

Eine Anlage stellt eine planvolle Zusammenstellung von technischen Komponenten dar. Die Komponenten können Maschinen, Geräte, Apparate, Speicher, Leitungen bzw. Transportstrecken und/oder Steuer- bzw. Regelelemente umfassen. Sie können funktional, steuerungstechnisch und/oder sicherheitstechnisch miteinander verbunden, verschaltet bzw. verknüpft sein. Anlagen werden in vielen unterschiedlichen Bereichen zu vielfältigen Zwecken betrieben. Dazu gehören beispielsweise verfahrens- oder prozesstechnische Anlagen, die in vielen Fällen der chemischen Industrie zuzurechnen sind. Der Begriff der Anlagen umfasst ebenfalls Raffinerien, Fernwärmesysteme, geo- oder solarthermische Anlagen, Anlagen zur Lebensmittelproduktion, Frischwasserversorgung oder Abwasserentsorgung, Biogasanlagen, etc.

### Filter

Als Filter werden in der Elektrotechnik und Nachrichtentechnik Schaltungen bezeichnet, die ein elektrisches Signal abhängig von der Frequenz in der Amplitude und in der Phasenlage verändern. Dadurch können unerwünschte Signalanteile abgeschwächt oder unterdrückt werden. Bekannte Beispiele sind Tiefpass- und Hochpassfilter, die jeweils hohe bzw. tiefe Frequenzen schwächen.

Elektronische Filter werden als Analogfilter bzw. analoge Filter bezeichnet, wenn sie die Signale zeit- und amplitudenkontinuierlich verarbeiten. Sie dienen entweder zur Formung von Signalen im gewünschten Sinn oder zur Feststellung, welche Frequenzen vertreten sind (Signalanalyse). Analoge Filter werden mit passiven elektronischen Bauelementen wie Kondensatoren, Spulen, Widerständen oder aktiv mit Operationsverstärkern aufgebaut. Im Gegensatz dazu ist ein digitales Filter ein mathematisches Filter zur Manipulation eines Signals, z. B. Sperren oder Durchlassen eines bestimmten Frequenzbereiches. Digitale Filter werden z.B. mit Logikbausteinen wie ASICs, FPGAs oder in Form eines sequentiellen Programmes mit einem Signalprozessor realisiert. Somit sind Software-basierte Filter immer digitale Filter, während Hardware-basierte Filter je nach den verwendeten Bausteinen und Schaltungen analoger oder auch digitaler Natur sein können.

### Feldgerät

Ein Feldgerät ist eine technische Einrichtung im Bereich der Automatisierungstechnik, die mit einem Produktionsprozess in direkter Beziehung steht. "Feld" bezeichnet in der Automatisierungstechnik den Bereich außerhalb von Schaltschränken bzw. Leitwarten. Feldgeräte können somit sowohl Aktoren (Stellglieder, Ventile etc.) als auch Sensoren (z.B. Messumformer) in der Fabrik- und Prozessautomation sein.

### I/P-Wandler

Ein I/P-Wandler ist ein elektrisch-pneumatischer Umformer. Abhängig von einem elektrischen Signal wird Druckluft bereitgestellt, deren Ausgangsdruck mit der Stromstärke des Signals variiert. Derartige Umformer werden z.B. zur Ansteuerung des Antriebs von pneumatisch angetriebenen Stellventilen verwendet.

### Rauschamplitude, Rauschbandbreite

Die Rauschamplitude entspricht der halben Rauschbandbreite und gibt die Größe des Rauschbandes an. Dieses beschreibt, wie sehr sich ein statisches (aber verrauschtes) Signal noch ändert. Ist das Rauschen durch gaußverteilte Störungen verursacht, kann die Rauschbandbreite nur stochastisch bestimmt werden. Z.B. kann man fordern, dass stets 99,73 % aller Werte des Signals innerhalb des Rauschbandes liegen müssen. Dann entspräche die Rauschbandbreite der sechsfachen Standardabweichung (6 Sigma) des Signals, sofern das Rauschen gauß'schen Charakter hat. Alternativ kann beispielsweise (als Vereinfachung) über einen vordefinierten Bereich die Differenz zwischen dem größten und dem kleinsten Wert als Rauschbandbreite verwendet werden.

### Regelkreis, Regelschleife

Ein Regelkreis (oder Regelschleife) weist einen Regler, eine Regelstrecke und eine Rückkopplungsschleife auf. Die Regelstrecke wirkt auf eine Regelgröße X ein. Für diese wird ein Sollwert W vorgegeben. Der Istwert der Regelgröße X wird gemessen. Aus dem Istwert X und dem Sollwert W ermittelt der Regler entsprechend der gewünschten Dynamik des Regelkreises eine Stellgröße Y, die über die Regelstrecke auf die Regelgröße X einwirkt mit dem Ziel, dass sich der Istwert X dem Sollwert W annähert.

### Stellungsregler

Ein Stellungsregler ist dasjenige Element eines Stellventils, das den Antrieb des Ventilgliedes des Ventils zum Öffnen oder Schließen des Ventils betätigt. Zum Stellungsregler gehört jeweils eine Regelschleife, um die Position des Ventilglieds abhängig von einer Vorgabe, z.B. einem Signal aus einer Leitwarte, zu regeln. Dabei ist der Antrieb des Ventilgliedes - in vielen Fällen ein elektrischer oder fluidischer Antrieb, wobei letzterer entweder hydraulisch oder mit Druckluft betrieben werden kann - Teil der Regelschleife und somit dem Stellungsregler eindeutig zugeordnet, auch wenn der Antrieb außerhalb des eigentlichen Stellungsreglers liegt.

### Bezugszeichen

- DT1: zeitliche Ableitung
- j/n: Ja/Nein-Signal
- N: erste vorgegebene Anzahl
- Pₐ: Ausgangsdruck
- P_{z}: Zuluftdruck
- T₁: vorgegebene Zeitspanne
- Tₘₑₐₙ: Mittelungszeit
- w, W: Ansteuersignal bzw. Sollwert
- Δw: vorgegebener Anteil
- X: Ist-Wert der Regelgröße
- Y: Stellgröße
- 110,210,310,315: Hardwarefilter
- 120, 220, 320: Störsignal aus Anlage
- 125, 225: Störung aus Stellungsregler
- 130, 230, 330: A/D-Wandler
- 140, 240, 340: Sollwertempfangsmodul
- 150, 250, 350: Schalter
- 160, 165: Filterkonstante
- 170, 270, 275, 370: Softwarefilter
- 180, 280, 380, W': (gefiltertes) Ansteuersignal zum Regelkreis
- 190, 290, 390: Warnmeldung
- 410, 910: Detektion lokaler Maxima
- 420, 920: Erkennung starkes Rauschen
- 930: Mittelung
- 940: Festlegung der ersten vorgegebenen Anzahl
- 1010: pneumatisch angetriebenes Feldgerät bzw. Stellventil
- 1020: Stellungsregler
- 1030: Vorrichtung zum Unterdrücken von Rauschen
- 1040: Regler
- 1050: I/P-Wandler
- 1060: Luftleistungsverstärker
- 1070: Positionssensor
- 1080: Regelkreis

### zitierte Literatur

zitierte Patentliteratur
EP 2 417 502 B1
US 2013/0041481 A1

## Patentansprüche

1. Verfahren zum Unterdrücken von Rauschen (120, 125; 220, 225; 320) in einem Ansteuersignal (w; W) für einen Regelkreis (1080) eines Feldgeräts (1010) zum Regulieren von Fluiden in einer prozesstechnischen Anlage;
wobei das Verfahren die folgenden Schritte umfasst:
1.1 das Ausmaß des Rauschens im Ansteuersignal (w; W) wird bestimmt; wobei das Ausmaß des Rauschens im Ansteuersignal (w; W) mit den folgenden Schritten ermittelt wird:
1.1.1 lokale Maxima des Ansteuersignals werden fortlaufend bestimmt (410; 910) und jeweils für die Dauer einer ersten vorgegebenen Zeitspanne (T₁) gezählt;
1.1.2 wenn die gezählte Anzahl der lokalen Maxima pro vorgegebener Zeitspanne (T₁) eine vorgegebene Anzahl (N) überschreitet, wird das Rauschen als stark bewertet; und 1.1.3 dass das Ausmaß des Rauschens dadurch bestimmt wird, wie oft während eines zweiten vorgegebenen Zeitraums das Rauschen als stark bewertet wird;
1.2 wenn das Ausmaß des Rauschens eine erste vorgegebene Schwelle überschreitet, wird das Rauschen im Ansteuersignal (w; W) durch einen Filter (170; 270, 275; 310, 315) reduziert, wodurch sich ein gefiltertes Ansteuersignal (W`) ergibt;
1.2.1 das gefilterte Ansteuersignal (W`) wird an den Regekreis (1080) weitergeleitet (180; 280; 380);
1.3 wenn das Ausmaß des Rauschens die erste vorgegebene Schwelle nicht überschreitet, wird das ungefilterte Ansteuersignal an den Regekreis (1080) weitergeleitet.

2. Verfahren nach dem vorhergehenden Anspruch,
**dadurch gekennzeichnet,**
2.1 dass, wenn das Ausmaß des Rauschens die erste vorgegebene Schwelle überschreitet, mindestens eine der folgenden Maßnahmen durchgeführt wird:
2.1.1 ein Hardwarefilter (310, 315) wird zugeschaltet;
2.1.2 ein Softwarefilter (170; 270, 275; 370) wird eingesetzt;
2.1.3 falls bereits ein Softwarefilter (270) verwendet wird, wird zu einem Softwarefilter (275) eines anderen Typs gewechselt; und/oder
2.1.4 falls bereits ein Softwarefilter (170) verwendet wird, wird eine Filterkonstante (160, 165) des Softwarefilters (170) verändert.

3. Verfahren nach einem der vorhergehenden Ansprüche,
**dadurch gekennzeichnet,**
3.1 dass ein Beeinflussungssignal zum Schalten und/oder Einstellen eines Filters (170; 270, 275; 310, 315) ausgegeben wird;
3.2 wobei das Beeinflussungssignal dem bestimmten Ausmaß des Rauschens entspricht.

4. Verfahren nach einem der vorhergehenden Ansprüche,
**dadurch gekennzeichnet,**
**dass** lokale Maxima des Ansteuersignals erkannt werden (410; 910), wenn das Ansteuersignal (w; W) nach einem Anstieg um einen vorgegebenen Anteil (Δw) absinkt.

5. Verfahren nach dem unmittelbar vorhergehenden Anspruch,
5.1 wobei das Ansteuersignal (w; W) einem Sollwert entspricht, der nicht statisch ist, **dadurch gekennzeichnet,**
5.2 dass die vorgegebene Anzahl (N) und/oder
5.3 der vorgegebene Anteil (Δw)
in Abhängigkeit von einem Mittelwert der zeitlichen Ableitung (DT1) des Ansteuersignals vorgegeben wird.

6. Verfahren nach einem der vorhergehenden Ansprüche,
**dadurch gekennzeichnet,**
**dass**, wenn das Ausmaß des Rauschens im Ansteuersignal (w; W) eine zweite vorgegebene Schwelle überschreitet, eine Warnmeldung (190; 290; 390) ausgegeben wird.

7. Verfahren nach dem unmittelbar vorhergehenden Anspruch,
**dadurch gekennzeichnet,**
**dass** mit den folgenden Schritten ermittelt wird, ob das Ausmaß des Rauschens die zweite vorgegebene Schwelle überschreitet:
7.1 das Ausmaß des Rauschens im gefilterten Ansteuersignal (W`) wird bestimmt;
7.2 wenn das Ausmaß des Rauschens im gefilterten Ansteuersignal (W`) die erste vorgegebene Schwelle überschreitet, gilt die zweite vorgegebene Schwelle als überschritten.

8. Verfahren nach Anspruch 6,
**gekennzeichnet durch**
die folgenden zusätzlichen Schritte:
8.1 als zweite vorgegebene Schwelle wird eine Schwelle für die Rauschamplitude festgelegt;
8.2 wenn das Ausmaß des Rauschens im Ansteuersignal (w; W) die erste vorgegebene Schwelle überschreitet, wird die Rauschamplitude des Ansteuersignals bestimmt.

9. Verfahren nach einem der vorhergehenden Ansprüche,
**dadurch gekennzeichnet,**
**dass** das Reduzieren des Rauschens im Ansteuersignal (w; W) durch einen Filter (170; 270, 275; 310, 315) beendet wird, wenn das Ausmaß des Rauschens für einen zweiten vorgegebenen Zeitraum unterhalb der ersten vorgegebenen Schwelle bleibt.

10. Vorrichtung (1030) zum Unterdrücken von Rauschen (120, 125; 220, 225; 320) in einem Ansteuersignal (w; W) für einen Regelkreis (1080) eines Feldgeräts (1010) zum Regulieren von Fluiden in einer prozesstechnischen Anlage, mit
10.1 einem ersten Anschluss zum Empfangen des Ansteuersignals (w; W);
10.2 mindestens einem schaltbaren Filtermodul (170; 270, 275; 310, 315) zum Reduzieren des Rauschens im Ansteuersignal (w; W);
10.3 einem Sollwertempfangsmodul (140; 240; 340) zum Bestimmen des Ausmaßes des Rauschens im empfangenen Ansteuersignal (w; W) und zum Schalten des mindestens einen Filtermoduls (170; 270, 275; 310, 315); und
10.4 einem zweiten Anschluss zum Weiterleiten des gefilterten oder des ungefilterten Ansteuersignals (180; 280; 380; W') an den Regelkreis (1080);
10.5 wobei das Sollwertempfangsmodul (140; 240; 340) derart konfiguriert ist, dass es das Verfahren nach einem der vorhergehenden Verfahrensansprüche ausführt.

11. Computerprogramm, umfassend Befehle, die bewirken, dass die Vorrichtung (1030) nach Anspruch 10 die Verfahrensschritte nach einem der Verfahrensansprüche 1 bis 9 ausführt.

12. Computerlesbares Medium, auf dem das Computerprogramm nach dem unmittelbar vorhergehenden Anspruch gespeichert ist.

13. Stellungsregler (1020) für ein Feldgerät (1010), wobei der Stellungsregler (1020) eine Vorrichtung (1030) nach Anspruch 10 aufweist.

14. Feldgerät (1010) zum Regulieren eines Fluides in einer prozesstechnischen Anlage mit einem Stellungsregler (1020) nach dem unmittelbar vorhergehenden Anspruch.

15. Prozesstechnische Anlage mit mindestens einem Feldgerät (1010) nach dem unmittelbar vorhergehenden Anspruch.

## Claims

1. Method for suppressing noise (120, 125; 220, 225; 320) in a control signal (w; W) for a control loop (1080) of a field device (1010) for regulating fluids in a process plant;
wherein the method comprises the following steps:
1.1 the extent of the noise in the control signal (w; W) is determined; wherein the extent of the noise in the control signal (w; W) is determined by the following steps:
1.1.1 local maxima of the control signal are continuously determined (410; 910) and each counted for the duration of a first predetermined time period (T₁);
1.1.2 if the counted number of local maxima per predetermined time period (T₁) exceeds a predetermined number (N), the noise is evaluated as strong; and
1.1.3 that the extent of the noise is determined by the number of times during a second predetermined time period that the noise is evaluated as strong;
1.2 when the extent of the noise exceeds a first predetermined threshold, the noise in the control signal (w; W) is reduced by a filter (170; 270, 275; 310, 315), resulting in a filtered control signal (W);
1.2.1 the filtered control signal (W) is forwarded to the control circuit (1080) (180; 280; 380);
1.3 if the extent of the noise does not exceed the first predetermined threshold, the unfiltered control signal is forwarded to the control circuit (1080).

2. Method according to the preceding claim,
**characterized in that**
2.1 if the extent of the noise exceeds the first predetermined threshold, at least one of the following measures is carried out:
2.1.1 a hardware filter (310, 315) is switched on;
2.1.2 a software filter (170; 270, 275; 370) is applied;
2.1.3 if a software filter (270) is already in use, a software filter (275) of a different type is switched to; and/or
2.1.4 if a software filter (170) is already in use, a filter constant (160, 165) of the software filter (170) is changed.

3. Method according to one of the preceding claims,
**characterized in that**
3.1 an influencing signal for switching and/or adjusting a filter (170; 270, 275; 310, 315) is output;
3.2 wherein the influencing signal corresponds to the determined extent of the noise.

4. Method according to one of the preceding claims,
**characterized in that**
local maxima of the control signal are recognized (410; 910) when the control signal (w; W) falls by a predetermined proportion (Δw) after an increase.

5. Method according to the immediately preceding claim,
5.1 wherein the control signal (w; W) corresponds to a setpoint value which is not static, **characterized in that**
5.2 the predetermined number (N) and/or
5.3 the predetermined proportion (Δw)
is predetermined as a function of an average value of the time derivative (DT1) of the control signal.

6. Method according to one of the preceding claims,
**characterized in that**
if the extent of the noise in the control signal (w; W) exceeds a second predetermined threshold, a warning message (190; 290; 390) is output.

7. Method according to the immediately preceding claim,
**characterized in that**
the following steps are used to determine whether the extent of the noise exceeds the second predetermined threshold:
7.1 the extent of the noise in the filtered control signal (W) is determined;
7.2 if the extent of the noise in the filtered control signal (W) exceeds the first predetermined threshold, the second predetermined threshold is considered to be exceeded.

8. Method according to claim 6,
**characterized by**
the following additional steps:
8.1 a threshold for the noise amplitude is set as the second predetermined threshold;
8.2 if the extent of the noise in the control signal (w; W) exceeds the first predetermined threshold, the noise amplitude of the control signal is determined.

9. Method according to one of the preceding claims,
**characterized in that**
the reduction of the noise in the control signal (w; W) by a filter (170; 270, 275; 310, 315) is terminated if the extent of the noise remains below the first predetermined threshold for a second predetermined time period.

10. Device (1030) for suppressing noise (120, 125; 220, 225; 320) in a control signal (w; W) for a control loop (1080) of a field device (1010) for regulating fluids in a process plant, having
10.1 a first connection for receiving the control signal (w; W);
10.2 at least one switchable filter module (170; 270, 275; 310, 315) for reducing the noise in the control signal (w; W);
10.3 a setpoint receiving module (140; 240; 340) for determining the extent of the noise in the received control signal (w; W) and for switching the at least one filter module (170; 270, 275; 310, 315); and
10.4 a second connection for forwarding the filtered or the unfiltered control signal (180; 280; 380; W) to the control loop (1080);
10.5 wherein the setpoint receiving module (140; 240; 340) is configured to perform the method according to one of the preceding method claims.

11. Computer program comprising instructions which cause the device (1030) according to claim 10 to perform the method steps according to any one of the method claims 1 to 9.

12. Computer-readable medium on which the computer program according to the immediately preceding claim is stored.

13. Positioner (1020) for a field device (1010), wherein the positioner (1020) comprises a device (1030) according to claim 10.

14. Field device (1010) for regulating a fluid in a process plant, having a positioner (1020) according to the immediately preceding claim.

15. Process plant having at least one field device (1010) according to the immediately preceding claim.

## Revendications

1. Procédé de suppression de bruit (120, 125 ; 220, 225 ; 320) dans un signal de commande (w ; W) pour une boucle de régulation (1080) d'un engin (1010) destiné à réguler des fluides dans une installation technique de traitement ;
dans lequel le procédé comprend les étapes suivantes :
1.1 on détermine l'ampleur du bruit dans le signal de commande (w ; W); dans lequel l'ampleur du bruit dans le signal de commande (w ; W) est déterminée par les étapes suivantes :
1.1.1 des maxima locaux du signal de commande sont déterminés en continu (410 ; 910) et comptés à chaque fois pendant la durée d'un premier laps de temps prédéfini (T₁) ;
1.1.2 si le nombre compté de maxima locaux par période de temps prédéterminée (T₁) dépasse un nombre prédéterminé (N), le bruit est jugé fort ; et
1.1.3 en ce que l'ampleur du bruit est déterminée par le nombre de fois où le bruit est jugé fort pendant une deuxième période de temps prédéterminée ;
1.2 lorsque le niveau de bruit dépasse un premier seuil prédéterminé, le bruit dans le signal de commande (w ; W) est réduit par un filtre (170 ; 270, 275 ; 310, 315), ce qui donne un signal de commande filtré (W) ;
1.2.1 le signal de commande filtré (W) est transmis (180 ; 280 ; 380) au circuit de régulation (1080) ;
1.3 si l'ampleur du bruit ne dépasse pas le premier seuil prédéterminé, le signal de commande non filtré est transmis au circuit de régulation (1080).

2. Procédé selon la revendication précédente,
**caractérisé en ce**
2.1 que si l'ampleur du bruit dépasse le premier seuil prédéterminé, au moins l'une des mesures suivantes est mise en oeuvre :
2.1.1 un filtre matériel (310, 315) est mis en circuit ;
2.1.2 un filtre logiciel (170 ; 270, 275 ; 370) est utilisé ;
2.1.3 si un filtre logiciel (270) est déjà utilisé, on passe à un filtre logiciel (275) d'un autre type ; et/ou
2.1.4 si un filtre logiciel (170) est déjà utilisé, une constante de filtrage (160, 165) du filtre logiciel (170) est modifiée.

3. Procédé selon l'une quelconque des revendications précédentes,
**caractérisé en ce**
3.1 qu'un signal d'influence est émis pour commuter et/ou régler un filtre (170 ; 270, 275 ; 310, 315) ;
3.2 dans lequel le signal d'influence correspond à l'étendue déterminée du bruit.

4. Procédé selon l'une quelconque des revendications précédentes,
**caractérisé en ce**
**que** des maxima locaux du signal de commande sont détectés (410 ; 910) lorsque le signal de commande (w ; W) diminue d'une proportion prédéterminée (Δw) après une augmentation.

5. Procédé selon la revendication immédiatement précédente,
5.1 dans lequel le signal de commande (w ; W) correspond à une consigne qui n'est pas statique,
**caractérisé en ce**
5.2 que le nombre prédéterminé (N) et/ou
5.3 la proportion prédéterminée (Δw)
est prédéterminée en fonction d'une valeur moyenne de la dérivée par rapport au temps (DT1) du signal de commande.

6. Procédé selon l'une quelconque des revendications précédentes,
**caractérisé en ce**
**que**, lorsque le niveau de bruit dans le signal de commande (w ; W) dépasse un deuxième seuil prédéterminé, un message d'alerte (190 ; 290 ; 390) est émis.

7. Procédé selon la revendication immédiatement précédente,
**caractérisé en ce**
**que** l'on détermine par les étapes suivantes si l'ampleur du bruit dépasse le deuxième seuil prédéterminé :
7.1 on détermine l'ampleur du bruit dans le signal de commande filtré (W) ;
7.2 si l'ampleur du bruit dans le signal de commande filtré (W) dépasse le premier seuil prédéterminé, le deuxième seuil prédéterminé est considéré comme dépassé.

8. Procédé selon la revendication 6,
**caractérisé par**
les étapes supplémentaires suivantes :
8.1 on fixe comme deuxième seuil prédéterminé un seuil pour l'amplitude du bruit ;
8.2 si l'ampleur du bruit dans le signal de commande (w ; W) dépasse le premier seuil prédéterminé, l'amplitude du bruit du signal de commande est déterminée.

9. Procédé selon l'une quelconque des revendications précédentes,
**caractérisé en ce**
**que** la réduction du bruit dans le signal de commande (w ; W) par un filtre (170 ; 270, 275 ; 310, 315) est arrêtée lorsque l'amplitude du bruit reste inférieure au premier seuil prédéterminé pendant une deuxième période de temps prédéterminée.

10. Dispositif (1030) pour supprimer le bruit (120, 125 ; 220, 225 ; 320) dans un signal de commande (w ; W) pour une boucle de régulation (1080) d'un engin (1010) destiné à réguler des fluides dans une installation technique de traitement, avec
10.1 une première connexion pour recevoir le signal de commande (w ; W) ;
10.2 au moins un module de filtrage commutable (170 ; 270, 275 ; 310, 315) pour réduire le bruit dans le signal de commande (w ; W) ;
10.3 un module de réception de valeur de consigne (140 ; 240 ; 340) pour déterminer l'ampleur du bruit dans le signal de commande reçu (w ; W) et pour commuter le au moins un module de filtrage (170 ; 270, 275 ; 310, 315) ; et
10.4 une deuxième connexion pour transmettre le signal de commande filtré ou non filtré (180 ; 280 ; 380 ; W) au circuit de régulation (1080) ;
10.5 dans lequel le module de réception de la consigne (140 ; 240 ; 340) est configuré pour mettre en oeuvre le procédé selon l'une quelconque des revendications de procédé précédentes.

11. Programme d'ordinateur comprenant des instructions pour que le dispositif (1030) selon la revendication 10 exécute les étapes du procédé selon l'une quelconque des revendications de procédé 1 à 9.

12. Support lisible par ordinateur sur lequel est enregistré le programme d'ordinateur selon la revendication immédiatement précédente.

13. Positionneur (1020) pour un engin (1010), dans lequel le positionneur (1020) comprend un dispositif (1030) selon la revendication 10.

14. Engin (1010) de régulation d'un fluide dans une installation technique de traitement comprenant un positionneur (1020) selon la revendication immédiatement précédente.

15. Installation de traitement comprenant au moins un engin (1010) selon la revendication précédente.
